# EUROPEAN PATENT APPLICATION

(11) **EP 2 309 387 A1**
(43) Date of publication of application: **13.04.2011**
(21) Application number: 09305945.9
(22) Date of filing: 06.10.2009
(51) Int. Cl.: G06F 9/48

(54) **A method of migrating a virtual machine, corresponding computer program product, and data storage device therefor**

(71) Applicant: Alcatel Lucent, 75008 Paris (FR)
(72) Inventor: Wahl, Stefan, 71701, Schwieberdingen (DE); Drewniok, Marc, 73728, Esslingen (DE); Kessler, Marcus, 73728, Esslingen (DE)
(74) Representative: Brose, Gerhard

(57) **Abstract**

The invention, concerns a Method of migrating a virtual machine comprising a plurality of memory pages from a source host to a destination host, the method comprising the steps of, in a first iteration, transferring (101) the memory pages from the source host to the destination host; determining (102) a subset of memory pages modified by the source host during the first iteration; in a subsequent iteration, synchronizing the subset of memory pages with the destination host; and, in response to a predetermined stop condition (105), discarding (106) the virtual machine on the source host and activating (106) the virtual machine on the destination, host, wherein, in order to synchronize the subset of memory pages, the method further comprises the steps of, in response to detecting a modification of a memory page, identifying (103) a modified memory area of the memory page and transferring (104) the memory area from the source host to the destination host. The invention further concerns a computer program product and a device therefor.

## Description

The invention relates to a method of migrating a virtual machine according to claim 1, a computer program product according to claim 9, and a data storage device according to claim 10.

In computing, a virtual machine (VM) is a software implementation of a computer that executes programs like a real computer. In the context of this application, use of the terms "virtual machine" or "VM" does not imply any direct correspondence to physical hardware. An essential characteristic of a VM is that the software it executes is limited to the resources and abstractions provided by the VM itself. The computer that executes the VM per se is commonly called the host.

To share the host's data storage, VMs commonly require virtual memory, that is, a computer system technique which gives an application program or VM the impression that it has contiguous working memory, also known as an address space, while in fact the working memory may be physically fragmented and may even overflow on to disk storage. State-of-the-art implementations of virtual memory divide the virtual address space of an application program into memory pages, that is, fixed-length blocks of contiguous virtual memory addresses. Memory pages are usually at least 4,096 bytes in size, and VMs with large virtual address ranges or hosts with high RAM capacity generally use larger page sizes.

In the following, by migration is meant the process of transferring a VM between different hosts. Migration is usually, but not necessarily, performed programmatically, freeing up human resources from the tedious tasks involved. Migration may be required when organizations or individuals exchange computer systems or upgrade to new systems, or when two or more hosts are merged.

A pertinent technique has been proposed in "Live Migration of Virtual Machines" by Christopher Clark, Keir Fraser, and Steven Hand, University of Cambridge Computer Laboratory, Jacob Gorm Hansen and Eric Jul, University of Copenhagen, and Christian Limpach, Ian Pratt, and Andrew Warfield, University of Cambridge. To this end, the paper describes a so-called pre-copy approach in which memory pages are iteratively copied from a source machine to a destination host, all without ever stopping the execution of the virtual machine being migrated.

A major downside of the pre-copy approach to VM migration is the overhead network traffic brought about by transferring entire memory pages from source to destination. Furthermore, the workload imposed by the copy operation leads to a significant consumption of central processing unit (CPU) resources.

It is thus an object of the invention to present an improved approach that reduces both network traffic and CPU load during the migration procedure to a bare minimum.

This object is achieved by a method according to claim 1, a computer program product according to claim 9, or a data storage device according to claim 10.

A main idea of the invention is, at any point throughout the migration process, to identify the smallest possible memory area that needs to be transferred from the source host to the destination host, thereby limiting the data volume to be transmitted to the minimum amount required.

Further developments of the invention can be gathered from the dependent claims and the following description.

In the following the invention will be explained further making reference to the attached drawing.

To migrate, according to an embodiment of the invention, a VM comprising a plurality of memory pages from a source host to a destination host, the memory pages are transferred from the source host to the destination host in a first iteration. Thereupon, that subset of memory pages is determined which has been modified by the source host while the first iteration was underway. In response to detecting the modification of a memory page, a modified memory area within the memory page is identified. In a subsequent iteration, the subset of memory pages of the source host is synchronized with the destination host by transferring the modified memory areas from the source host to the destination host. Eventually, in response to a predetermined stop condition, the VM on the source host is discarded, and the VM on the destination host is activated.

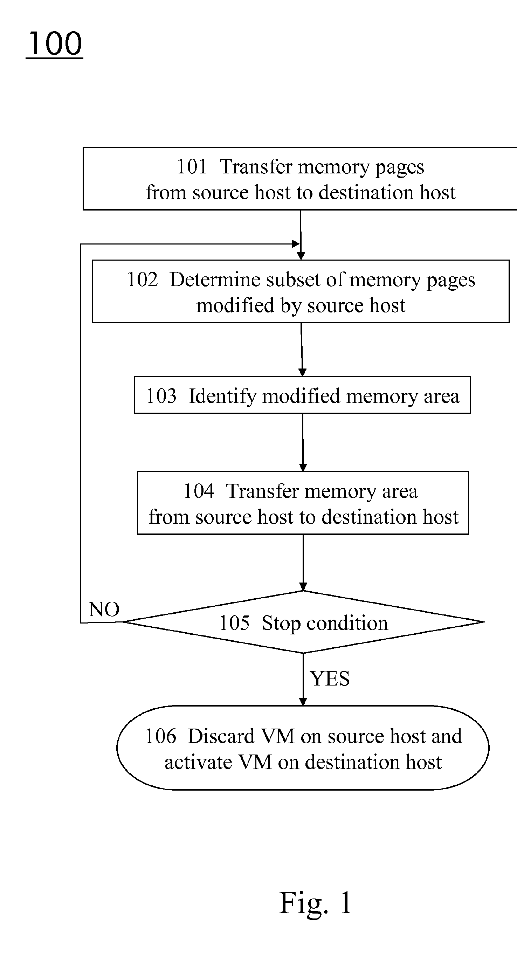

Fig. 1 shows a flowchart depicting a method according to an embodiment of the invention.

In the following, a method according to the invention is elucidated by way of example, referencing Fig. 1.

The flowchart 100 of Fig. 1 comprises a first processing step 101, a second processing step 102, a third processing step 103, and a fourth processing step 104, each represented by a rectangle. The flowchart 100 further comprises a decision 105, represented as a rhombus, and a terminator 106, represented as a rounded rectangle. A flow of control passing through the processing steps 101 to 104, the decision 105, and the terminal 106 is represented by a set of arrows. An arrow starting at a first symbol and ending at a second symbol indicates that control passes from the first symbol to the second symbol. The two arrows starting at the decision 105 correspond to a positive or negative decision being taken and are labeled accordingly.

In the embodiment at hand, the method is performed by a virtual machine monitor (VMM), also called a hypervisor. By a VMM is meant any platform virtualization software that allows multiple VMs, then called system or hardware VMs, to run on a host computer concurrently. Here, in particular, the VMM is responsible for monitoring and enforcing policy on the VM to be migrated. To eliminate unnecessary resource consumption, the VMM is executed both by the source host and the destination host without any underlying operating system, that is, on the bare hardware of each host. In the art of platform virtualization, such a VMM is commonly called a type 1, native, or bare-metal hypervisor.

To allow for a tight integration with the host hardware, the VMM may be embedded in the firmware of the platform or the operating system kernel. In the latter case, the VMM is typically termed a kernel-based virtual machine (KVM).

In an alternative embodiment, to decouple the VMM from its underlying host hardware, it may take the form of a type 2 or hosted hypervisor, that is, a software application running within a conventional operating system environment.

It is understood that, in an alternative embodiment, a method according to the invention may be jointly carried out by software executed on the source host and different software executed on the destination host. Such architecture bears the advantage that both hosts need only store the respective functionality required for the source or destination of the migration.

In a preliminary step (not depicted), the VMM initializes a transfer queue for storing modified memory areas. In computer science, by queue is meant a particular kind of collection whose entities are kept in order, the principal or only operations on the collection being the addition of entities to the rear terminal position and removal of entities from the front terminal position. The resulting data structure thus obeys a first-in-first-out (FIFO) principle.

To further optimize the order in which modified memory areas are transferred, the transfer queue takes the form of a priority queue, that is, a queue in which each memory area is associated with a priority inversely proportional to its modification frequency. This prioritization bears the additional benefit that transfer of such memory areas is postponed which are likely to be modified again before migration is completed, thus potentially eliminating the need for multiple transfers of the same memory area. To minimize the later overhead imposed on the MMU when dequeueing memory areas according to their associated priority, the transfer queue is implemented as a sorted list.

The VM to be migrated makes use of virtual memory divided into a number of memory pages. In the first step 101, the VMM transfers a complete snapshot of these memory pages from the source host to the destination host.

In the second step 102, the VMM determines that subset of memory pages that was modified by the source host while the memory pages were transferred in the first step 101, commonly called dirty pages. Considering the amount of data transferred from the source host to the destination host in the first step 101, the probability of modifications during that interval is usually high.

In the third step 103, to further narrow down the exact data that requires synchronization with the destination host, the VMM not only determines the modified memory page per se, but also identifies the modified memory area within the memory page for each modification detected.

To alleviate migration impact on the CPU load of the source host, the VMM makes use of a first memory management unit (MMU) of the source host. By MMU, sometimes called paged memory management unit (PMMU), is meant a computer hardware component responsible for handling access to memory requested by the CPU. Among the conventional tasks of the first MMU is the translation of virtual addresses to physical addresses of the source host, encompassing management of the virtual memory used by the VM. Depending on the underlying hardware architecture of the source host, the first MMU may further support functionality such as memory protection, cache control, bus arbitration, or bank switching.

In the scenario at hand, the VMM employs the first MMU to detect the memory modification and identify the affected memory area of the source host in the third step 103. To this end, upon initiating migration, the VMM configures the first MMU to perform these tasks for any write access to the virtual memory used by the VM to be migrated.

In the fourth step 104, the VMM transfers the modified memory area identified in the third step 103 from the source host to the destination host. Accordingly, on the source host, the VMM configures the first MMU to add any modified memory area to the transfer queue that was initialized prior to migration. Furthermore, the VMM provides for the contents of the queue to be transferred from the source host to the destination host in an asynchronous fashion. For a further reduction of CPU load, the VMM may also make use of the first MMU for the initial transfer of memory pages in the first step 101.

To avoid any uncontrolled growth of the transfer queue, potentially leading to an unwanted congestion of the source host, the first MMU preemptively monitors the transfer queue size. Such monitoring may take place asynchronously or in response to the addition of a memory area to the transfer queue. If the rate at which memory pages are dirtied exceeds the throughput between the source host and the destination host, both approaches allow the VMM to interfere in good time before capacity overload threatens to negatively impact the source host's performance. For example, the VMM may decide to suspend migration and alert a VMM administrator to the condition at hand.

To allow the source host and the destination host to connect by means of a computer network, the VMM makes use of network interface controllers (NICs), also known as a network interface cards, network adapters, network interface card, or LAN adapters. In particular, the VMM employs a first NIC on the source host and a second NIC on the destination host, both NICs being attached to the computer network. More specifically, the VMM configures the first NIC and the second NIC to synchronize or mirror the transfer queue on the source and destination hosts.

On the destination host, upon receipt of the memory area, the VMM removes it from the transfer queue and applies the reported modification to its local copy of the VM. For this purpose, to alleviate impact of the migration on the CPU load of the destination host, the VMM makes use of a second MMU of the destination host. Specifically, upon initiating migration, the VMM configures the second MMU to monitor the transfer queue for in-bound memory areas and, upon detection, update the VM accordingly.

To further minimize data transfer between the source host and the destination host, the MMU optimizes the transfer queue when enqueueing a memory area on the source host. For this event, the VMM configures the MMU to search the transfer queue for an overlapping memory area, indicating the posterior memory update at least partially overriding the prior. In case of success, the MMU is configured to combine the pair of memory areas, resulting in a consolidated memory area of reduced size. Finally, the MMU replaces the pair of memory areas already enqueued by the consolidated memory area, thus reducing the total number of elements in the transfer queue by one.

It is noted that the term "overlap" in this context is meant to include the case of the memory areas being completely congruent. In this special case, the MMU may choose to simply discard the antecedent update.

In an alternative embodiment, to accelerate queue optimization, more sophisticated algorithms may be used by the MMU to detect and combine three or more mutually overlapping memory areas in a single optimisation step.

To provide for an efficient and space-saving data structure, the MMU represents the memory area by the sequence of words it contains, paired with its start address. Here, by word is meant a fixed-sized group of bits that are handled together by the source host, that is, the natural unit of data used by its particular computer design. To downsize the transfer queue, an alternative embodiment may choose to represent the memory area only by its address range, necessitating a readout of the referenced memory contents by the MMU prior to synchronization or mirroring of the transfer queue in the fourth step 104.

Depending on factors such as the modification frequency of the virtual memory or the packet size of the computer network, the VMM may provide for an aggregation of multiple memory areas before transferring them from the source host to the destination host. In this case, upon transfer, the memory areas must be disaggregated on the destination host before applying the associated updates.

Upon transferring the modified memory area or areas in the fourth step 104, the VMM takes the decision 105 whether a predetermined stop condition is fulfilled. For instance, the stop condition may depend on the number of memory pages or memory areas modified in the course of the previous iteration. If this number falls short of a predefined threshold, the VMM would consider the stop condition to be met.

In a further step (not depicted), to ultimately arrive at a consistent copy of the VM at both the source host and the destination host, the VMM suspends the VM on the source host. At this point, since no more memory pages can be dirtied on the source host, the VMM may transfer any remaining inconsistent memory areas without further disruption. To allow for a seamless switchover to the destination host, the VMM further transfers the state of the source host's CPU(s) to the destination host. This phase is commonly called the stop-and-copy phase of a live VM migration.

Finally, the VMM discards the original VM on the source host, instantly activating the migrated VM on the destination host. To make the VMM administrator aware of the completed migration, the VMM further reports completion through a user interface.

If the result of the decision 105 is negative, the VMM, mutatis mutandis, repeats the second step 102, the third step 103, and the fourth step 104, now applying to the memory modified while the previous iteration was underway.

In an alternative embodiment, the establishment of a direct communication channel among two or more MMUs may be used independently of the VM migration scenario outlined above. For example, such inter-MMU exchange may be used to accelerate memory access Among nodes of a computer cluster, that is, a group of linked computers, working together closely so that in many respects they form a single computer.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of migrating a virtual machine comprising a plurality of memory pages from a source host to a destination host, the method comprising the steps of,
in a first iteration, transferring (101) the memory pages from the source host to the destination host,
determining (102) a subset of memory pages modified by the source host during the first iteration,
in a subsequent iteration, synchronizing the subset of memory pages with the destination host, and,
in response to a predetermined stop condition (105), discarding (106) the virtual machine on the source host and activating (106) the virtual machine on the destination host,
**characterized in that**, in order to synchronize the subset of memory pages, the method further comprises the steps of,
in response to detecting a modification of a memory page, identifying (103) a modified memory area of the memory page and
transferring (104) the memory area from the source host to the destination host.

2. A method according to claim 1, **characterized in that** the modification is detected and the memory area is identified (103) by means of a first memory management unit of the source host.

3. A method according to claim 1 or 2, **characterized in that** the method further comprises the steps of
in a preliminary step, initializing a transfer queue adapted for storing memory areas,
in order to transfer (104) the memory area, adding the memory area to the transfer queue on the source host and transferring the contents of the transfer queue from the source host to the destination host, and,
in response to detecting the memory area in the transfer queue on the destination host, removing the memory area from the transfer queue and applying the modification to the virtual machine on the destination host.

4. A method according to claim 3, **characterized in that** the contents of the transfer queue are transferred by means of a first network interface controller on the source host and a second network interface controller on the destination host, the first and second network interface controllers being attached to a computer network.

5. A method according to claim 3 or 4, **characterized in that** the modification to the virtual machine on the destination host is applied by a second memory management unit of the destination host.

6. A method according to any of the claims 3 to 5, **characterised in that** the method further comprises the step of
searching the transfer queue for overlapping memory areas,
in response to detecting a pair of overlapping memory areas, combining the pair of overlapping memory areas intro a consolidated memory area, and
abridging the queue by replacing the pair of overlapping memory areas with the consolidated memory area.

7. A method according to any of the preceding claims, **characterized in that** the memory area is represented as a sequence of words contained in the memory area and a start address of the memory area.

8. A method according to any of the preceding claims, **characterized in that**, in order to transfer (104) the memory area, the method further comprises the steps of aggregating a plurality of memory areas, transferring the plurality of memory areas from the source host to the destination host, and disaggregating the plurality of memory areas.

9. A computer program product comprising computer-executable instructions for performing a method when the program is run on a computer, the method comprising the steps of,
in a first iteration, transferring (101) memory pages from a source host to a destination host,
determining (102) a subset of memory pages modified by the source host during the first iteration,
in a subsequent iteration, synchronizing the subset of memory pages with the destination host, and,
in response to a predetermined stop condition (105), discarding (106) a virtual machine on the source host and activating (106) the virtual machine on the destination host,
**characterized in that**, in order to synchronize the subset of memory pages, the method further comprises the steps of,
in response to detecting a modification of a memory page, identifying (103) a modified memory area of the memory page and
transferring (104) the memory area from the source host to the destination host.

10. A device programmed or configured to perform a method comprising the steps of,
in a first iteration, transferring (101) memory pages to a destination host,
determining (102) a subset of memory pages modified by the device during the first iteration,
in a subsequent iteration, synchronising the subset of memory pages with the destination host, and,
in response to a predetermined stop condition (105), discarding (106) a virtual machine on the device and activating (106) the virtual machine on the destination host, **characterized in that**, in order to synchronize the subset of memory pages, the method further comprises the steps of,
in response to detecting a modification of a memory page, identifying (103) a modified memory area of the memory page and
transferring (104) the memory area from the device to the destination host.
